(19) **Europäisches Patentamt European Patent Office Office européen des brevets**

(11) **EP 4 764 974 A1**

(12) **EUROPEAN PATENT APPLICATION**

(43) Date of publication:
24.06.2026 Bulletin 2026/26

(51) International Patent Classification (IPC):
***G06N 10/40*** (2022.01) ***G06N 10/70*** (2022.01)

(21) Application number: 24307286.5

(52) Cooperative Patent Classification (CPC):
**G06N 10/40; G06N 10/70**

(22) Date of filing: **23.12.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventor: **COTTET, Nathanaël**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **A NON-LINEAR SUPERCONDUCTING QUANTUM CIRCUIT CONFIGURED TO OPERATE IN A RESONANT DISSIPATIVE MODE AND A KERR HAMILTONIAN MODE**

(57) A non-linear superconducting quantum circuit (1) including a memory mode (3), a buffer mode (5), a SNAIL (7) coupled to both the memory mode (3) and the buffer mode (5), a SNAIL flux line (9) inductively coupled to the SNAIL (7), and a DC SQUIDs flux line (11) inductively coupled to a tunable inductive element (21).

The non-linear superconducting quantum circuit (1) is configured to operate in:
• a resonant dissipative mode in which the SNAIL flux line (9) causes the SNAIL (7) to implement three-wave mixing between the memory mode (3) and the buffer mode (5), and the DC SQUIDs flux line (11) varies the buffer resonant frequency to be equal to twice the memory resonant frequency, and
• a Kerr Hamiltonian mode in which the SNAIL flux line (9) causes the SNAIL (7) to implement four-wave mixing between the memory mode (3) and the buffer mode (5).

FIG. 1

EP 4 764 974 A1

## Description

The field of the invention relates to a non-linear superconducting quantum circuit in which three-wave mixing and four-wave mixing between a memory mode and a buffer mode can be implemented, with the capability to switch from one to the other. Such a non-linear superconducting quantum circuit makes it possible to stabilize a cat qubit according to both resonant dissipative stabilization and Kerr Hamiltonian stabilization.

Generally speaking, superconducting qubits can be implemented as two-level systems of superconducting electronic circuits. Such qubits can be stored in bosonic modes and thus form a particular class of superconducting qubits known as bosonic qubits.

It is known from the state of the art that it is possible to stabilize cat qubits, i.e. bosonic qubits defined by a quantum manifold spanned by the superpositions of two coherent states, which are quasi-classical states of the bosonic mode. To this end, a specific dissipative stabilization mechanism may be performed and consists in engineering a non-linear conversion between two photons of a memory mode that hosts the stabilized quantum manifold and one photon of a buffer mode that is strongly dissipative.

The possibility of realizing such a qubit has been demonstrated by R. Lescanne et al. in "Exponential suppression of bit-flips in a qubit encoded in an oscillator" (Nature Physics, 2020). As mentioned above, the cat qubits rely on a mechanism that dissipates photons in pairs. This process pins down two coherent states to separate locations in phase space. By increasing this separation, an exponential decrease of the bit-flip rate was observed experimentally while only linearly increasing the phase-flip rate. As a result, stabilized cat qubits were demonstrated to benefit from a high noise bias, which means that the bit-flip probability is exponentially smaller than the phase-flip probability.

Specifically, such a dissipative stabilization, particularly the two-to-one ("2-to-1") photon exchange, was achieved by using an asymmetrically threaded superconducting quantum interference device ("ATS") used as a four-wave mixing non-linear element along with a parametric pump - also known as a two-photon pump - arranged to deliver microwave radiation at a frequency equal to the absolute value of the difference between twice the resonant frequency of the memory mode and the resonant frequency of the buffer to the ATS, i.e. at a frequency $f_p = |2f_a - f_b|$, where $f_a$ is the resonant frequency of the memory mode and $f_b$ is the resonant frequency of the buffer mode. This dissipative stabilization scheme is generally referred to as parametric, due to the use of the parametric pump to achieve the two-to-one photon exchange.

In such a parametric dissipative stabilization, the two-photon coupling rate $g_2$, which quantifies the strength of the two-to-one photon exchange, is proportional to the amplitude $\varepsilon_p$ of the parametric pump. This proportionality is both an advantage, as it provides tunability of the two-photon coupling rate $g_2$, and a drawback, as the two-photon coupling rate $g_2$ is limited by the amplitude $\varepsilon_p$ of the parametric pump. That is, the Applicant has recognized that the amplitude of the parametric pump used in the prior art to enable four-wave mixing via the non-linear element cannot be arbitrarily increased without introducing parasitic effects associated with the harmonics of this parametric pump (i.e. mixing of the pump into higher order non-linear terms may eventually produce undesirable effects). It is known that increasing the pump power has detrimental effects such as degrading cavity lifetimes, introducing heating effects or turning on uncontrolled non-linearities which degrade the overall performance.

A known solution to avoid such a limitation is to implement a *resonant* dissipative stabilization by using a three-wave mixing non-linear element - instead of a four-wave mixing non-linear element -, while the resonant frequency of the buffer mode is equal to twice the resonant frequency of the memory mode, i.e. $2f_a = f_b$. In such a case, the two-to-one photon exchange is not activated by parametric pumping, as it is intrinsically performed. The resonant dissipative stabilization is described in more detail in the European patent application EP 4 207 005 A1 filed by the Applicant.

On the other hand, one benefit of the four-wave mixing non-linear element - the ATS - used in the parametric dissipative stabilization is that the two-to-one photon exchange can be easily switched off, which may be beneficial for particular operations such as a Z or CNOT gate.

A possible solution for implementing high-performance gates is to use a stabilization scheme other than the dissipative stabilization schemes presented above, whether parametric dissipative stabilization or resonant dissipative stabilization. In this regard, Kerr Hamiltonian stabilization enables much lower error rates on gates compared to the parametric and resonant dissipative stabilization.

The Kerr Hamiltonian stabilization is achieved by using a superconducting non-linear asymmetric inductive element (SNAIL) as the nonlinear oscillator, along with a squeezing drive arranged to deliver microwave radiation at a frequency equal to twice the resonant frequency of the nonlinear oscillator. The combination of the squeezing drive and the Kerr nonlinearity allows, without dissipation, the stabilization of a cat qubit - or Kerr-cat qubit - whose cat states are the degenerate ground states of the nonlinear oscillator.

However, Kerr Hamiltonian stabilization also suffers from several drawbacks, most notably the bit-flip time, which is the main limitation. Indeed, a Kerr-cat qubit is vulnerable to parasitic phenomena such as photon dephasing, thermal excitation, or detuning. The confinement potential of a Kerr-cat qubit features minima corresponding to coherent states but also excited states that are non-degenerate in energy. As a consequence, an error such as thermal excitation can bring the Kerr-cat qubit from a ground state to an excited state, then coherently tunnel to another excited state, ultimately ending up in the ground state other than the initial one, thereby achieving a bit-flip.

The present invention seeks to improve the situation, particularly to address the need for a trade-off between the suppression of bit-flips and the implementation of gates with a satisfactory level of fidelity.

To this end, the Applicant proposes a non-linear superconducting quantum circuit including:

- a memory mode including a memory capacitive element and a memory inductive element, the memory mode having a memory resonant frequency depending on the memory capacitive element and the memory inductive element;
- a buffer mode including a buffer capacitive element and a buffer inductive element, the buffer inductive element including DC superconducting quantum interference devices, DC SQUIDs, in series, the buffer mode having a buffer resonant frequency depending on the buffer capacitive element and the buffer inductive element;
- a superconducting non-linear asymmetric inductive element, SNAIL, coupled to both the memory mode and the buffer mode;
- a SNAIL flux line inductively coupled to the SNAIL and configured to generate a SNAIL magnetic flux through the SNAIL, the SNAIL magnetic flux causing the SNAIL to implement nonlinear mixing between the memory mode and the buffer mode, the nonlinear mixing having a three-wave component and a four-wave component; and
- a DC SQUIDs flux line inductively coupled to the buffer inductive element and configured to generate a DC SQUIDs magnetic flux through the buffer inductive element, the DC SQUIDs magnetic flux varying an inductance of the buffer inductive element.

The non-linear superconducting quantum circuit is configured to operate at least in:

- a resonant dissipative mode in which the SNAIL flux line generates a SNAIL magnetic flux causing the SNAIL to implement nonlinear mixing between the memory mode and the buffer mode, with the three-wave component of the nonlinear mixing being greater than the four-wave component, and the DC SQUIDs flux line generates a DC SQUIDs magnetic flux varying the inductance of the buffer inductive element for tuning the buffer resonant frequency to be substantially equal to twice the memory resonant frequency, and
- a Kerr Hamiltonian mode in which the SNAIL flux line generates a SNAIL magnetic flux causing the SNAIL to implement nonlinear mixing between the memory mode and the buffer mode, with the four-wave component of the nonlinear mixing being greater than one-tenth of the three-wave component.

According to one or more embodiments, each DC SQUID is symmetric, and the buffer inductive element further includes Josephson junctions in series.

For example, the symmetric DC SQUIDs are arranged successively in series, thereby forming a chain of symmetric DC SQUIDs, and the Josephson junctions are arranged successively in series, thereby forming a chain of Josephson junctions. The chain of symmetric DC SQUIDs and the chain of Josephson junctions are connected in series.

In another example, the symmetric DC SQUIDs and the Josephson junctions are connected in series alternately.

Alternatively, each DC SQUID is asymmetric.

According to one or more embodiments, the SNAIL flux line is a fast-flux line.

Generally speaking, the SNAIL is a superconducting loop containing a single Josephson junction and at least one chain of Josephson junctions.

Typically, the single Josephson junction has a Josephson energy lower than that of each Josephson junction of the at least one chain of Josephson junctions.

For example, the at least one chain of Josephson junctions includes only one chain of Josephson junctions. The chain of Josephson junctions and the single Josephson junction are connected in parallel. The chain of Josephson junctions forms an additional buffer inductive element. The buffer mode further includes the additional buffer inductive element, with the buffer resonant frequency further depending on the additional buffer inductive element.

Alternatively, the at least one chain of Josephson junctions includes a first chain of Josephson junctions and a second chain of Josephson junctions. The first chain of Josephson junctions and the second chain of Josephson junctions are connected to each other, on the one hand, via a common node and, on the other hand, via the single Josephson junction. The SNAIL thus has a triangular topology. The first chain of Josephson junctions and the second chain of Josephson junctions form respectively an additional buffer inductive element and an additional memory inductive element. The memory mode further includes the additional memory inductive element, with the memory resonant frequency further depending on the additional memory inductive element. The buffer mode further includes the additional buffer inductive element, with the buffer resonant frequency further depending on the additional buffer inductive element.

According to one or more embodiments, the SNAIL magnetic flux causes the SNAIL to exhibit a potential energy whose Taylor series expansion around a superconducting phase point at which the potential energy is minimized includes third- and fourth-order coefficients corresponding to the three- and four-wave components, respectively. The three-wave component is greater than the four-wave component when the third-order coefficient is greater than the fourth-order coefficient in absolute value. The four-wave component is greater than one-tenth of the three-wave component when the fourth-order coefficient is greater than one-tenth of the third-order coefficient in absolute value.

Advantageously, in the resonant dissipative mode, the SNAIL flux line generates a SNAIL magnetic flux causing the SNAIL to implement only three-wave mixing between the memory mode and the buffer mode.

Preferably, in the Kerr Hamiltonian mode, the SNAIL flux line generates a SNAIL magnetic flux causing the SNAIL to implement nonlinear mixing between the memory mode and the buffer mode, with the four-wave component of the nonlinear mixing being greater than the three-wave component.

Advantageously, in the Kerr Hamiltonian mode, the SNAIL flux line generates a SNAIL magnetic flux causing the SNAIL to implement only four-wave mixing between the memory mode and the buffer mode.

The Applicant also proposes a quantum system comprising:

- the non-linear superconducting quantum circuit as described above,
- a control circuit including:

  • a buffer drive arranged to deliver electromagnetic radiation at a frequency substantially equal to the buffer resonant frequency to drive the buffer mode,
  • a squeezing drive arranged to deliver electromagnetic radiation at a frequency substantially equal to twice the memory resonant frequency to drive the SNAIL,
  • a SNAIL current source arranged to supply the SNAIL flux line with electric current, and
  • a DC SQUIDs current source arranged to supply the DC SQUIDs flux line with electric current.

The quantum system is configured to perform:

  o a resonant dissipative stabilization in which the SNAIL current source and the DC SQUIDs current source respectively supply the SNAIL flux line and the DC SQUIDs flux line with a respective electric current to operate the non-linear superconducting quantum circuit in the resonant dissipative mode, while the buffer drive drives the buffer mode for causing the non-linear superconducting quantum circuit to stabilize a resonant cat qubit in the memory mode, and
  o a Kerr Hamiltonian stabilization in which the SNAIL current source supplies the SNAIL flux line with an electric current to operate the non-linear superconducting quantum circuit in the Kerr Hamiltonian mode, and the squeezing drive drives the SNAIL for causing the non-linear superconducting quantum circuit to stabilize a Kerr-cat qubit in the memory mode.

Other features and advantages of the invention will become apparent from the following description provided for indicative and non-limiting purposes, with reference to the accompanying drawings, wherein:

- Figure 1 illustrates a non-linear superconducting quantum circuit according to the invention,

- Figure 2 illustrates various designs for realizing a tunable inductive element,

- Figure 3 illustrates an example of a superconducting non-linear asymmetric inductive element (SNAIL) including only one chain of Josephson junctions,

- Figure 4 illustrates an embodiment of the non-linear superconducting quantum circuit, in which the SNAIL has a topology similar to that of Figure 3,

- Figure 5 illustrates an example of a SNAIL including two chains of Josephson junctions,

- Figure 6 illustrates another embodiment of the non-linear superconducting quantum circuit, in which the SNAIL has a topology similar to that of Figure 5,

- Figure 7 illustrates a physical layout of the non-linear superconducting quantum circuit,

- Figure 8 illustrates a zoom of Figure 7 on the SNAIL,

- Figure 9 illustrates the curves of the second-, third- and fourth-order coefficients of the Taylor series expansion of the potential energy of the SNAIL as functions of the reduced applied SNAIL magnetic flux,

- Figure 10 illustrates the influence of the voltage of a SNAIL flux line, inductively coupled to the SNAIL, on the resonant frequency of the buffer mode,

- Figure 11 illustrates simulation results, which show the influence of the reduced applied SNAIL magnetic flux and the inductance of the tunable inductive element on the resonant frequency of the memory mode, the resonant frequency of the buffer mode and the frequency matching condition,

- Figure 12 illustrates the influence of the voltage of a DC SQUIDs flux line, inductively coupled to the tunable inductive element, on the resonant frequency of the buffer mode,

- Figure 13 illustrates how to achieve the frequency matching condition, with the SNAIL implementing a nonlinear mixing with the three-wave component being dominant over the four-wave component,

- Figure 14 illustrates a zoom of Figure 7 on the tunable inductive element,

- Figure 15 schematically illustrates a quantum system according to the invention, and

- Figure 16 illustrates the curves of the two-photon coupling rate and the Kerr nonlinearity as functions of the reduced applied SNAIL magnetic flux.

The drawings and the following description are comprised for the most part of positive and well-defined features. As a result, they are not only useful in understanding the invention, but they can also be used to contribute to its definition, should the need arise.

## A. Cat qubits

So far, the Applicant's work has been generally concerned with the stabilization of cat qubits. As previously explained, R. Lescanne *et al.* (2020) demonstrated that such cat qubits can be stabilized with a non-linear conversion between two photons of a memory mode a - also known as "cat qubit mode" - and one photon of a buffer mode b.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with :

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flips is only at the cost of linear increase of phase-flips.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flips with the average number of photons in the cat states.

It is generally considered that the use of a single repetition code is sufficient to correct the remaining errors as bit-flips are sufficiently rare; and, more particularly, a phase-flip correction code is sufficient to correct the remaining phase-flips. This can be for instance a repetition code defined in the dual base or any other state-of-the-art error correction code.

In view of the foregoing, the stabilization schemes rely on the two-to-one photon exchange between the memory mode a and the buffer mode b. However, it should be noted that the above-detailed teaching applies more broadly to two-to-one boson exchange between the memory mode a and the buffer mode b.

The memory mode a may be realized with an acoustic resonator, while the buffer mode b may be realized with an electromagnetic buffer. In such a case, the two-to-one boson exchange is achieved by exchanging two phonons in the acoustic resonator with one photon in the electromagnetic buffer.

The acoustic resonator may be a nanomechanical resonator. Examples include phononic crystal defect resonators (PCDRs), which are nanoscale devices designed to support localized acoustic resonances in the gigahertz range. As notably demonstrated in P. Arrangoiz-Arriola et al. "Resolving the energy levels of a nanomechanical oscillator" (Nature 571, 537 (2019)), a hybrid platform combining nanomechanical piezoelectric resonators with a superconducting qubit on a single chip allows achieving strong couplings between acoustic and electromagnetic modes in superconducting circuits. The nanomechanical piezoelectric resonators may be fabricated using piezoelectric materials such as lithium niobate (LiNbO$_3$).

Particularly promising are quasi-one-dimensional PCDRs which operate at gigahertz frequencies and confine acoustic modes to volumes smaller than 1 $\mu m^3$ within suspended nanostructures. Prior experiments have demonstrated their coupling to transmon qubits, offering potential advantages over conventional electromagnetic resonators.

Other acoustic resonators, such as membranes, could also be employed, provided linear acoustic-to-electromagnetic coupling is achieved in order to perform the two-to-one boson exchange.

However, in the rest of the description, and for the sake of simplification, the two-to-one boson exchange is a two-to-one photon exchange.

## A.1 Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number characterizing the cat qubit.

This jump operator is realized by coupling a lossy buffer mode b with dissipation rate $\kappa_b$ to the memory mode a via a four-wave mixing non-linear element - typically a Josephson junction or an ATS -, and by engineering the Hamiltonian $H/\hbar = g_2(a^2 - \alpha^2)b^\dagger + \text{h.c.}$, where b is the photon annihilation operator of the buffer mode b, $g_2$ is the two-photon coupling rate, and $\hbar$ is the reduced Planck constant.

This Hamiltonian is engineered by applying a two-photon pump at frequency $|2f_a - f_b|$ to the four-wave mixing non-linear element, and by driving the buffer mode b at frequency $f_b$, provided $g_2 < \kappa_b$.

b) a Kerr Hamiltonian stabilization, which is performed by combining Kerr nonlinearity and a squeezing drive applied to a superconducting non-linear asymmetric inductive element (SNAIL) at a frequency equal to twice the resonant frequency thereof.

The corresponding Hamiltonian can be expressed as follows: $H/\hbar = -K a^{\dagger 2}a^2 + \varepsilon_2(a^{\dagger 2} + a^2)$, where $K$ is the amplitude of the Kerr nonlinearity, $a$ is the photon annihilation operator, $\varepsilon_2$ is the amplitude of the squeezing drive, and $\hbar$ is the reduced Planck constant.

This Hamiltonian can also be expressed as follows: $\frac{K}{2}(a^{\dagger 2} - \alpha^2)(a^2 - \overline{\alpha^2})$, where $\alpha$ is a complex number characterizing the (Kerr-)cat qubit.

c) a two-photon exchange (TPE) Hamiltonian stabilization, which can be performed in the same way as the parametric dissipative stabilization to engineer the following Hamiltonian: $H/\hbar = g_2(a^2 - \alpha^2)\sigma_+ + \text{h.c.}$, where $g_2$ is the two-photon coupling rate, $a$ is the photon annihilation operator, $\alpha$ is a complex number characterizing the cat qubit, $\sigma_+$ is the raising operator, and $\hbar$ is the reduced Planck constant.

d) a dissipative squeezing stabilization, with jump operator $L_{sc} = \sqrt{\kappa_{sc}}((\cosh(r)a + \sinh(r)e^{i\theta}a^\dagger)^2 - \alpha^2)$, where $\kappa_{sc}$ is the squeezed two-photon dissipation rate, $a$ is the photon annihilation operator of the memory mode a, $\alpha$ is a complex number characterizing the cat qubit, $r$ and $\theta$ are the modulus and argument of the complex squeezing parameter $\xi = re^{i\theta}$.

This jump operator can be realized by coupling a lossy buffer mode b with dissipation rate $\kappa_b$ to the memory mode a via a four-wave mixing non-linear element - typically a Josephson junction or an ATS -, and by engineering the Hamiltonian $H/\hbar = g_{SC}((\cosh(r)a + \sinh(r)e^{i\theta}a^\dagger)^2 - \alpha^2)b^\dagger + \text{h.c.}$, where b is the photon annihilation operator of the buffer mode b, $g_{sc}$ is the squeezed two-photon coupling rate, and $\hbar$ is the reduced Planck constant.

This Hamiltonian is engineered by using three pumps at frequencies $|2f_a - f_b|$, $f_b$ and $2f_a + f_b$ respectively, and by driving the buffer mode b at frequency $f_b$, provided $g_{sc} < \kappa_b$.

e) a *moon* stabilization, for which the Applicant filed the European patent application EP 4 468 211 A1, in which a bosonic qubit - called "*moon cat qubit*" since the two blobs of the Wigner function have a crescent moon shape - is stabilized by coupling the memory mode a and the buffer mode b via an ATS, and by engineering the Hamiltonian $H/\hbar = g_2(a^2 + \lambda a^\dagger a - \alpha^2)b^\dagger + \text{h.c.}$, where $g_2$ is the two-photon coupling rate, $a$ is the annihilation operator of the memory mode a, $\lambda$ is a complex number introduced with longitudinal coupling, $\alpha$ is a complex number characterizing the (moon) cat qubit, b is the annihilation operator of the buffer mode b, and $\hbar$ is the reduced Planck constant.

This Hamiltonian is engineered by applying both a two-photon pump at frequency $|2f_a - f_b|$ and a longitudinal pump at frequency $f_b$ to the ATS, and by driving the buffer mode b at frequency $f_b$.

A comparison between the moon cat qubit and the squeezed cat qubit - stabilized with dissipative squeezing stabilization - could be established by expressing $\lambda$ as a function of the complex squeezing parameter $\xi = re^{i\theta}$ as follows: $\lambda = 2\tanh(r)$.

f) a DC dissipative stabilization, for which the Applicant filed the European patent application EP 23306839.4, in which a cat qubit is stabilized in the spirit of the parametric dissipative stabilization, except that the two-photon pump that engineers the non-linear conversion between two photons of the memory mode a and one photon of the buffer mode b is replaced with a DC voltage source which biases a non-linear element formed exclusively of one or more Josephson junctions.

The DC-biased non-linear element acts as a voltage-to-frequency converter which, at the appropriate voltage bias, provides the required parametric interaction at frequency $|2f_a - f_b|$ necessary to achieve dissipative stabilization.

The two-photon coupling rate $g_2$ is not limited by the amplitude of the two-photon pump: $g_2 = \frac{E_J}{4}\varphi_a^2\varphi_b$, where $E_J$ is the Josephson energy of the one or more Josephson junctions, $\varphi_a$ is the zero-point fluctuation of the phase of the memory mode a, and $\varphi_b$ is the zero-point fluctuation of the phase of the buffer mode b.

g) a resonant dissipative stabilization, for which the Applicant filed the European patent application EP 4 207 005 A1, with jump operator $L_2 = \sqrt{\kappa_2}(a^2 - \alpha^2)$ , where $\kappa_2$ is the two-photon dissipation rate, $a$ is the photon annihilation operator of the memory mode a and $\alpha$ is a complex number characterizing the cat qubit.

This jump operator can be realized by coupling a lossy buffer mode b with dissipation rate $\kappa_b$ to the memory mode a via a three-wave mixing non-linear element, and by which engineering the Hamiltonian $H/_\hbar = g_2(a^2 - \alpha^2)b^\dagger + \mathrm{h.c.}$ , where $g_2$ is the two-photon coupling rate, b is the photon annihilation operator of the buffer mode b, and $\hbar$ is the reduced Planck constant, provided the mode frequencies verify substantially $2f_a = f_b$ and $g_2 < \kappa_b$.

This Hamiltonian is engineered only by driving the buffer mode b at frequency $f_b$, as the two-to-one photon exchange is intrinsically performed.

The invention described below relates to a non-linear superconducting quantum circuit that enables both Kerr Hamiltonian stabilization - stabilization scheme b) above - and resonant dissipative stabilization - stabilization scheme g) above.

## B. A hybrid non-linear superconducting quantum circuit

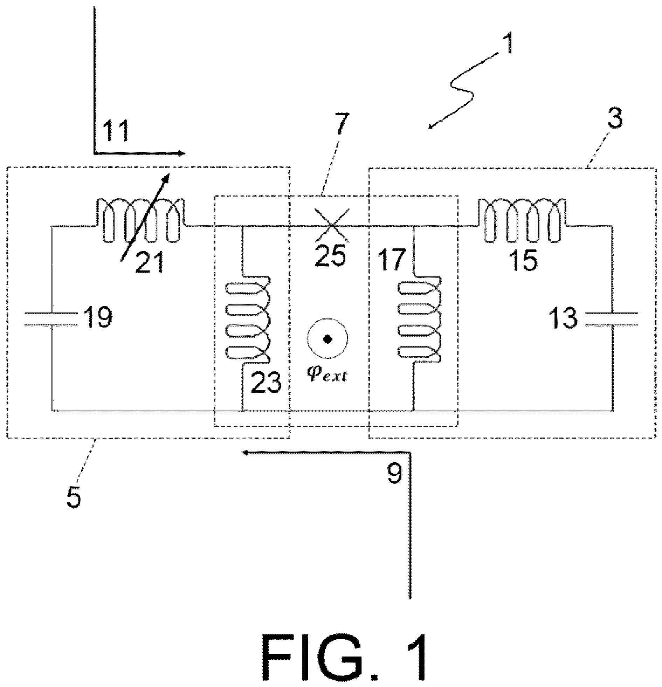

Figure 1 illustrates a non-linear superconducting quantum circuit 1 having a memory mode a and a buffer mode b, and enabling three-wave mixing and four-wave mixing between the memory mode a and the buffer mode b to be implemented.

The memory mode a and the buffer mode b each have a respective resonant frequency. The memory mode a has a resonant frequency $f_a = \frac{\omega_a}{2\pi}$ and the buffer mode b has a resonant frequency $f_b = \frac{\omega_b}{2\pi}$ , where $\omega_a$ and $\omega_b$ are the respective angular resonant frequencies of the memory mode a and the buffer mode b. The resonant frequencies $f_a$ and $f_b$ correspond to natural resonant frequencies of the non-linear superconducting quantum circuit 1.

By "having" a memory mode a and a buffer mode b, it should be understood here that the non-linear superconducting quantum circuit 1 comprises components operating in a superconducting regime which host the memory mode a and the buffer mode b.

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, where $f$ is the resonant frequency and $\Delta f$ is the spectroscopic linewidth; or (b) via a time-domain measurement wherein a tone is sent in, and a return signal is measured after a pre-determined time, wherein

$Q = f * \tau$, where $\tau$ is the characteristic decay time. Of course, the skilled person would be aware of various other methods for determining the quality factor of a particular mode, whether the memory mode a or the buffer mode b.

The non-linear superconducting quantum circuit 1 is intended to be subject to both electromagnetic radiations and electrical power supply in order to perform a resonant dissipative stabilization or a Kerr Hamiltonian stabilization for stabilizing a cat qubit in the memory mode a. The frequency of each electromagnetic radiation can be tuned to select specific terms within the rotating-wave approximation (RWA).

The resonant dissipative stabilization and the Kerr Hamiltonian stabilization implemented with the non-linear superconducting quantum circuit 1 will be described in more detail in section C. below.

## B.1 The memory mode and the buffer mode coupled via a SNAIL

The non-linear superconducting quantum circuit 1 comprises a memory resonator 3, a buffer resonator 5, a superconducting non-linear asymmetric inductive element 7, a SNAIL flux line 9 and a DC SQUIDs flux line 11.

The memory resonator 3 is configured to host the memory mode a. In other words, the memory resonator 3 provides the non-linear superconducting quantum circuit 1 with the memory mode a. The resonant frequency of the memory resonator 3 is the resonant frequency $f_a$ of the memory mode a.

In the following, the wordings "memory resonator 3" and "memory mode a" are used interchangeably, and the memory mode a can be considered as the portion or set of components of the non-linear superconducting quantum circuit 1 corresponding to the memory resonator 3.

In the example of Figure 1, the memory resonator 3 - or equivalently, the memory mode a - includes a memory capacitive element 13, a memory inductive element 15 and an additional memory inductive element 17.

For the sake of conciseness, the *memory* capacitive element 13, the *memory* inductive element 15 and the additional *memory* inductive element 17 are more briefly referred to as capacitive element 13, inductive element 15 and additional inductive element 17 respectively in the following.

The capacitive element 13 and the inductive element 15 are connected in series. Alternatively, the capacitive element 13 and the inductive element 15 can be connected in parallel.

The inductive element 15 can take the form of a chain of Josephson junctions, i.e. several Josephson junctions arranged successively in series.

As shown in Figure 1, the additional inductive element 17 is part of the superconducting non-linear asymmetric inductive element 7 and participates in the memory mode a. The additional inductive element 17 will be discussed in more detail below.

The buffer resonator 5 is configured to host the buffer mode b. In other words, the buffer resonator 5 provides the non-linear superconducting quantum circuit 1 with the buffer mode b. The resonant frequency of the buffer resonator 5 is the resonant frequency $f_b$ of the buffer mode b.

In the following, the wordings "buffer resonator 5" and "buffer mode b" are used interchangeably, and the buffer mode b can be considered as the portion or set of components of the non-linear superconducting quantum circuit 1 corresponding to the buffer resonator 5.

In the example of Figure 1, the buffer resonator 5 - or equivalently, the buffer mode b - includes a buffer capacitive element 19, a buffer inductive element 21 and an additional buffer inductive element 23.

For the sake of conciseness, the *buffer* capacitive element 19, the *buffer* inductive element 21 and the additional *buffer* inductive element 23 are more briefly referred to as capacitive element 19, inductive element 21 and additional inductive element 23 respectively in the following.

The capacitive element 19 and the inductive element 21 are connected in series. Alternatively, the capacitive element 19 and the inductive element 21 can be connected in parallel.

As shown in Figure 1, the additional inductive element 23 is part of the superconducting non-linear asymmetric inductive element 7 and participates in the buffer mode b. The additional inductive element 23 will be discussed in more detail below.

B.2 The tunable inductive element

The inductive element 21 is unique in that its inductance is variable and can therefore be adjusted. Such a variable inductance makes it possible to tune the resonant frequency of the buffer resonator 5, i.e. the resonant frequency $f_b$ of the buffer mode b. To achieve this, the inductive element 21 includes at least DC superconducting quantum interference devices in series.

A Superconducting QUantum Interference Device (SQUID) is a superconducting loop containing at least one Josephson junction. The SQUID exploits the properties of the Josephson junction, i.e. two superconductors connected through a small insulating junction or layer between which supercurrent tunneling can occur.

There are two types of SQUID: the DC SQUID, which contains two Josephson junctions in parallel; and the RF SQUID, which contains a single Josephson junction and is generally coupled to an LC circuit with an alternating current source of radio frequency.

Details of the SQUID, including the equations that govern its behavior, can be found, *inter alia,* in the article by A. Kraft et al., "Superconducting Quantum Interference Device (SQUID)" (UBC Physics 502 Project (2017 Fall)).

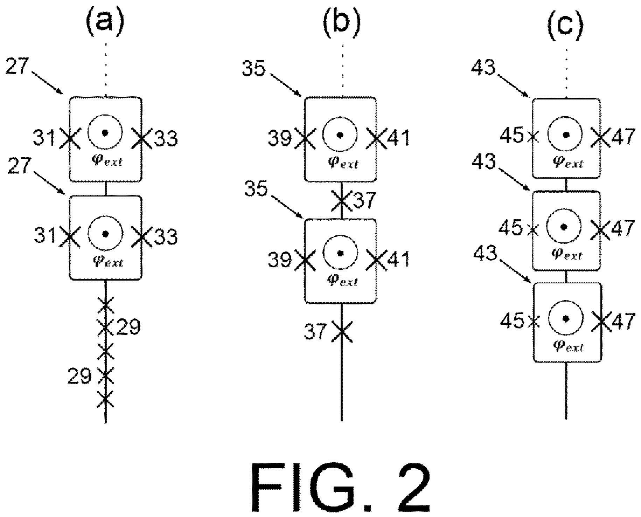

Figure 2 shows three possible designs for realizing the tunable inductive element 21 (not referenced in this figure).

According to design (a) the tunable inductive element 21 includes a chain of DC SQUIDs 27 and a chain of Josephson junctions 29. In other words, the tunable inductive element 21 includes several DC SQUIDs 27 arranged successively in series and several Josephson junctions 29 arranged successively in series.

Each DC SQUID 27 is a superconducting loop containing a Josephson junction 31 and a Josephson junction 33 in parallel. Moreover, each DC SQUID 27 is symmetric, which means that the Josephson junction 31 and the Josephson junction 33 have substantially the same Josephson energy - also known as "tunneling energy". Equivalently, the Josephson junction 31 and the Josephson junction 33 have substantially the same Josephson inductance. It can also be stated that the Josephson junction 31 and the Josephson junction 33 are substantially identical.

Likewise, the Josephson junctions 29 are substantially identical.

By "substantially the same Josephson energy", "substantially the same Josephson inductance" and "substantially identical", it should be understood that the Josephson junctions ideally have the same Josephson energy and, equivalently, the same Josephson inductance. However, in practice, the Josephson inductance and the Josephson energy may differ or deviate by 1%, 5% or even 10% from one Josephson junction to the other.

In the example of design (a), the DC SQUIDs 27 are substantially identical.

In the example of design (a), the Josephson junctions 31, 33 are "larger" than the Josephson junctions 29, which means that the Josephson junctions 31, 33 have a Josephson energy greater than that of the Josephson junctions 29. This is made apparent by the fact that the symbol of each Josephson junction 31, 33 is bigger than that of each Josephson junction 29. Equivalently, the Josephson junctions 31, 33 have a Josephson inductance lower than that of the Josephson junctions 29, as Josephson inductance is inversely proportional to Josephson energy.

The chain of DC SQUIDs 27 and the chain of Josephson junctions 29 are connected in series.

The considerations regarding the order relation between the Josephson junctions 31, 33 and the Josephson junctions 29 - specifically their size, Josephson energy, and Josephson inductance - are provided here as a clarification in relation to the example of diagram (a). However, such an order relation is of no particular importance and could even be reversed. Diagram (a) primarily proposes a topology: a chain of symmetric DC SQUIDs and a chain of Josephson junctions, which are connected in series.

According to design (b), the tunable inductive element 21 includes a plurality of DC SQUIDs 35 and a plurality of Josephson junctions 37.

Each DC SQUID 27 is a superconducting loop containing a Josephson junction 39 and a Josephson junction 41 in parallel. Moreover, each DC SQUID 27 is symmetric, which means, as explained above, that the Josephson junction 31 and the Josephson junction 33 have substantially the same Josephson energy and, equivalently, the same Josephson inductance. The Josephson junction 31 and the Josephson junction 33 are therefore substantially identical.

Likewise, the Josephson junctions 37 are substantially identical.

In design (b), the DC SQUIDs 35 are substantially identical.

In the example of design (b), the Josephson junctions 39, 41 are substantially identical to the Josephson junctions 37, which means that the Josephson junctions 39, 41 have substantially the same Josephson energy - or equivalently, substantially the same Josephson inductance - as the Josephson junctions 37. This is made apparent by the fact that the symbol of each Josephson junction 39, 41 is the same size as that of each Josephson junction 29.

The DC SQUIDs 35 and the Josephson junctions 37 are connected in series alternately.

Again, the considerations regarding the order relation between the Josephson junctions 39, 41 and the Josephson junctions 37 are provided here as a clarification in relation to the example of diagram (b). However, such an order relation is of no particular importance and could even be reversed. Diagram (b) primarily proposes a topology: symmetric DC SQUIDs and Josephson junctions, which are connected in series alternately.

Finally, according to design (c), the tunable inductive element 21 includes a chain of DC SQUIDs 43. In other words, the tunable inductive element 21 includes several DC SQUIDs 43 arranged successively in series.

Each DC SQUID 43 is a superconducting loop containing a Josephson junction 45 and a Josephson junction 47 in parallel. Moreover, each DC SQUID 43 is asymmetric, which means that the Josephson junction 45 and the Josephson junction 47 have different Josephson energies. Equivalently, the Josephson junction 45 and the Josephson junction 47 have different Josephson inductances. It can also be stated that the Josephson junction 45 and the Josephson junction 47 are different.

In design (c), the DC SQUIDs 43 are substantially identical.

More particularly, the Josephson junction 47 is "larger" than the Josephson junction 45, which means that the Josephson junction 47 has a Josephson energy greater than that of the Josephson junction 45. This is made apparent by the fact that the symbol of each Josephson junction 47 is bigger than that of each Josephson junction 45. Equivalently, the Josephson junction 47 has a Josephson inductance lower than that of the Josephson junction 45.

In Figure 2, the reduced magnetic flux applied to each DC SQUID 27, 35, 43 is conventionally indicated by the reference sign $\varphi_{ext}$. However, in the following, the reference sign $\varphi_{ext}$ will be used to designate the reduced applied SNAIL magnetic flux.

B.3 The SNAIL for implementing nonlinear mixing between the memory mode and the buffer mode

Referring to Figure 1, the superconducting non-linear asymmetric inductive element 7 is coupled to both the memory mode a and the buffer mode b. The superconducting non-linear asymmetric inductive element 7 is arranged to implement nonlinear mixing between the memory mode a and the buffer mode b.

A Superconducting Non-linear Asymmetric Inductive element (SNAIL) is a superconducting loop containing a single Josephson junction and at least one chain of Josephson junctions, i.e. several Josephson junctions arranged successively in series.

The SNAIL was first described by N. E. Frattini et al. in the article "3-Wave Mixing Josephson Dipole Element" (arXiv:1702.00869), where it is above all described as a dipole circuit element with third-order nonlinearity for implementing three-wave mixing. This article defines the SNAIL as a superconducting loop of *n* large Josephson junctions - corresponding here to the at least one chain of Josephson junctions - and a single smaller Josephson junction - corresponding here to the single Josephson junction.

In this article, the single Josephson junction and the - single - chain of Josephson junctions are connected in parallel.

In addition, the single Josephson junction is "smaller" than the Josephson junctions of the chain of Josephson junctions, which means that the single Josephson junction has a Josephson energy lower than that of each Josephson junction of the chain of Josephson junctions. Equivalently, the single Josephson junction has a Josephson inductance greater than that of each Josephson junction of the chain of Josephson junctions. Such an order relation between the single Josephson junction and the Josephson junctions of the chain of Josephson junctions, although preferable, is not absolutely necessary.

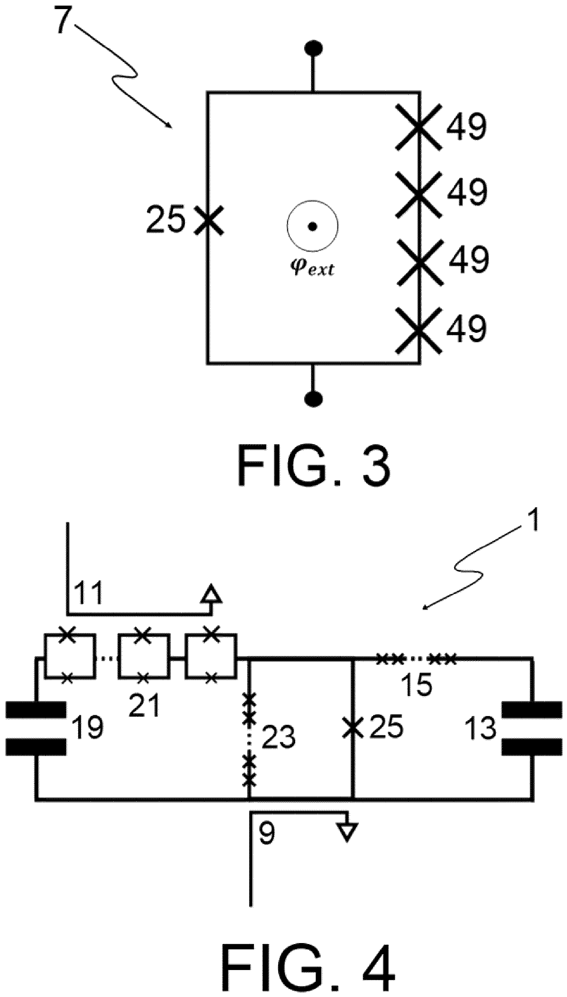

Figure 3 illustrates an example of the SNAIL 7, in which the SNAIL 7 includes only one chain of Josephson junctions 49, along with a single Josephson junction 25. The single Josephson junction 25 and the chain of Josephson junction 49 are connected in parallel. This topology is the same as that described in Frattini *et al.* (2017).

The single Josephson junction 25 is also shown in Figure 1, where it carries the same reference sign.

The Josephson junctions 49 are substantially identical.

It is made apparent that the single Josephson junction 25 is "smaller" than the Josephson junctions 49 by the fact that the symbol of the single Josephson junction 25 is smaller than that of each Josephson junction 49. However, as mentioned above, such an order relation between the single Josephson junction 25 and the Josephson junctions 49, although preferable, is not absolutely necessary

According to the canonical formalism, each Josephson junction has a Josephson energy $E_J$, while the single Josephson junction 25 has a Josephson energy $\alpha E_J$, where $\alpha$ is a real number between 0 and 1.

In the example of Figure 3, the chain of Josephson junctions 49 includes four Josephson junctions 49. However, generally speaking, the chain of Josephson junctions 49 includes a number $N$ of Josephson junctions 49, where $N$ is an integer greater than or equal to two.

The chain of Josephson junctions 49 forms a single inductive element.

In such a case, as illustrated in the example of Figure 4, the SNAIL 7 (not referenced in this figure) includes the inductive element 23, which corresponds to this single inductive element, along with the single Josephson junction 25.

The inductive element 23 participates in the buffer mode b and therefore forms the *additional* inductive element 23 of the buffer mode b. The resonant frequency $f_b$ of the buffer mode b depends on the additional inductive element 23, and not only on the capacitive element 19 and the tunable inductive element 21.

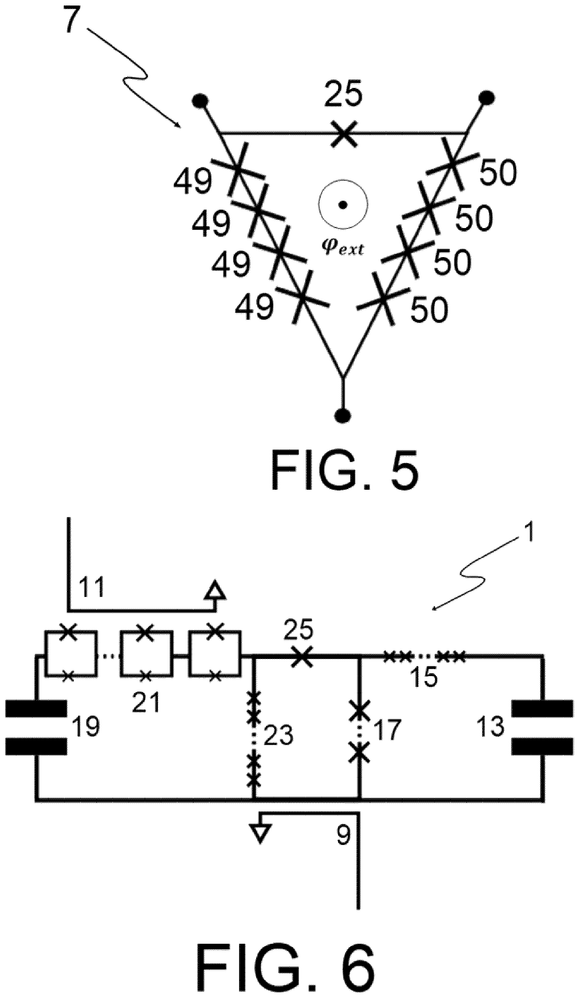

Alternatively, the SNAIL 7 can be realized as shown in Figure 5.

Figure 5 shows a triangular topology of the SNAIL 7, in which the SNAIL 7 includes a first chain of Josephson junctions 49 and a second chain of Josephson junctions 50, along with the single Josephson junction 25. The first chain of Josephson junctions 49 and the second chain of Josephson junctions 50 are distinct and are connected to each other, on the one hand, via a common node and, on the other hand, via the single Josephson junction 25.

In the example of Figure 5, the first chain of Josephson junctions 49 and the second chain of Josephson junctions 50 each include four Josephson junctions. However, generally speaking, the first chain of Josephson junctions 49 includes two or more Josephson junctions 49, and the second chain of Josephson junctions 50 includes two or more Josephson junctions 50.

The first chain of Josephson junctions 49 and the second chain of Josephson junctions 50 respectively form first and second inductive elements.

In such a case, as illustrated in the example of Figure 6, the SNAIL 7 (not referenced in this figure) includes the inductive element 17 and the inductive element 23, which correspond to these first and second inductive elements respectively, along with the single Josephson junction 25.

The inductive element 17 participates in the memory mode a and therefore forms the *additional* inductive element 17 of the memory mode a. The resonant frequency $f_a$ of the memory mode a depends on the additional inductive element 17, and not only on the capacitive element 13 and the inductive element 15.

The inductive element 23 participates in the buffer mode b and therefore forms the *additional* inductive element 23 of the buffer mode b. The resonant frequency $f_b$ of the buffer mode b depends on the additional inductive element 23, and not only on the capacitive element 19 and the tunable inductive element 21. The same reference sign "23" is used in Figures 4 and 6 for simplicity, even though the realization of the SNAIL 7 is different.

It should be noted that the example of Figure 6 is equivalent to that of Figure 1.

It should also be noted that the Josephson junctions of the first chain of Josephson junctions forming the additional inductive element 17 are substantially identical. Likewise, the Josephson junctions of the second chain of Josephson junctions forming the additional inductive element 23 are also substantially identical.

However, the Josephson junctions forming the additional inductive element 17 are larger than those forming the additional inductive element 23, as made apparent by the symbols used to represent them in Figure 6.

Again, the considerations regarding the order relation between the Josephson junctions of the additional inductive element 17 and the Josephson junctions of the additional inductive element 23 are provided here as a clarification in relation to the example of Figure 6. However, such an order relation is of no particular importance and could even be reversed.

Finally, it should be noted that, in Figures 4 and 6, the tunable inductive element 21 is realized according to diagram (c) of Figure 2, i.e. a chain of asymmetric DC SQUIDs.

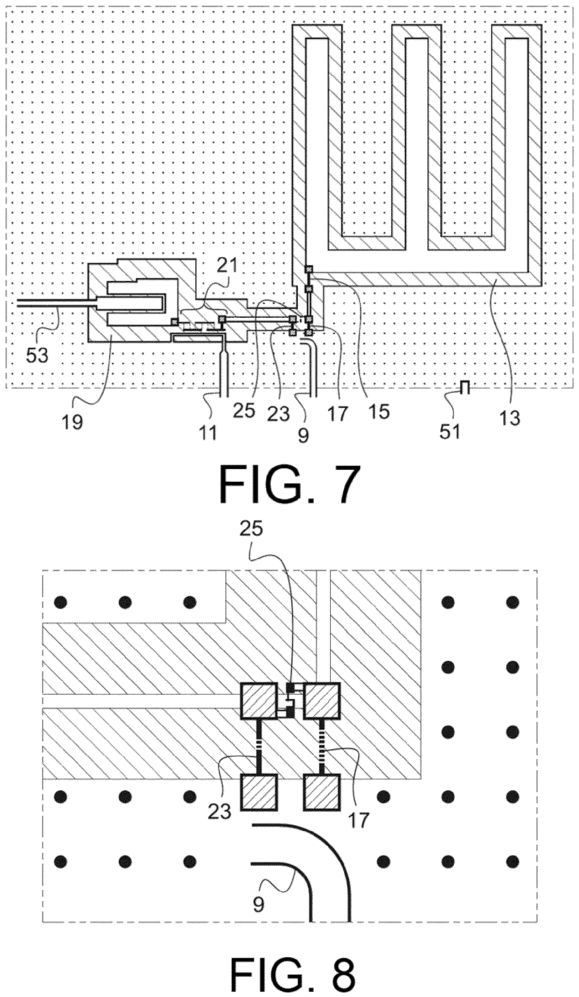

Figure 7 shows an example of a physical layout of the non-linear superconducting quantum circuit 1.

It should be noted that, in Figure 7, a memory drive line 51 of the memory mode a and a buffer drive line 53 of the buffer mode b are shown.

Referring to Figure 1, the SNAIL flux line 9 is inductively coupled to the SNAIL 7.

The SNAIL flux line 9 is capable of carrying an electric current, which flows along the SNAIL flux line 9 in the direction indicated by an arrow in Figure 1.

The SNAIL flux line 9 is configured to generate a SNAIL magnetic flux through the SNAIL 7. More particularly, the SNAIL flux line 9 generates such a SNAIL magnetic flux through the SNAIL 7 when the SNAIL flux line 9 is traversed by an electric current. This applied SNAIL magnetic flux threads the superconducting loop corresponding to the SNAIL 7.

The SNAIL magnetic flux causes the SNAIL 7 to implement nonlinear mixing between the memory mode a and the buffer mode b.

As explained above, the SNAIL is above all described in N. E. Frattini *et al.* (2017) as a dipole circuit element with third-order nonlinearity for implementing three-wave mixing. However, the nonlinear mixing implemented using the SNAIL has a three-wave component and a four-wave component, even though either of the three- and four-wave components of the nonlinear mixing may be zero, depending on the SNAIL magnetic flux.

Figure 8 is a zoom of the physical layout of Figure 7. More particularly, Figure 8 shows the SNAIL 7 (not referenced in this figure) and the SNAIL flux line 9.

It appears that the SNAIL 7 is realized according to the triangular topology of Figure 5, thus following the approach of Figures 1 and 6.

The thin lines visible in Figure 8 at the additional inductive element 17 and the additional inductive element 23 each correspond to a respective Josephson junction.

The SNAIL magnetic flux causes the SNAIL 7 to exhibit a potential energy U.

The SNAIL 7 is assumed to have $N$ large Josephson junctions and a single Josephson junction 25, where each of the $N$ large Josephson junctions has a Josephson energy $E_J$, and the single Josephson junction 25 has a Josephson energy $\alpha E_J$, where $\alpha$ is a real number between 0 and 1. The $N$ large Josephson junctions together form an inductive element with a Josephson energy $E_L$, where $E_L = {E_J}/{N}$ .

The potential energy U of the SNAIL 7 can be expressed as follows:

$$U = -\alpha E_J \cos(\varphi - \varphi_{ext}) - NE_J \cos\left(\frac{\varphi}{N}\right)$$

where: - $\varphi_{ext}$ is the reduced applied ("external") SNAIL magnetic flux, with $\varphi_{ext} = 2\pi {\Phi_{ext}}/{\Phi_0}$ , where $\Phi_{ext}$ is the applied ("external") SNAIL magnetic flux, and $\Phi_0 = {h}/{2e}$ , where $h$ is the Planck constant and e is the elementary charge; and - $\varphi$ is the superconducting phase across the single Josephson junction 25.

At constant reduced applied SNAIL magnetic flux $\varphi_{ext}$, the potential energy $U$ can be expanded into a Taylor series around a superconducting phase point $\varphi_{min}$, i.e. a value of the superconducting phase $\varphi$ at which the potential energy $U$ is minimized. In other words:

$$\varphi_{min}(\varphi_{ext}) = \arg\min_{\varphi} U(\varphi_{ext})$$

The potential energy $U$ is expanded into a Taylor series around $\varphi_{min}$ as follows:

$$U = \sum_n c_n(\varphi_{ext})(\varphi - \varphi_{min})^n$$

The Taylor series expansion of the potential energy U has second-order, third-order and fourth-order monomials $\tilde{\varphi}^2$, $\tilde{\varphi}^3$ and $\tilde{\varphi}^4$, where $\tilde{\varphi} = \varphi - \varphi_{min}$, with respective second-order, third-order and fourth-order coefficients $c_2$, $c_3$ and $c_4$ all depending on the number $N$ of large Josephson junctions, the real number $\alpha$ and the reduced applied SNAIL magnetic flux $\varphi_{ext}$.

In particular, the third-order coefficient $c_3$ corresponds to the three-wave component of the nonlinear mixing between the memory mode a and the buffer mode b implemented by the SNAIL 7, while the fourth-order coefficient $c_4$ corresponds to the four-wave component of the nonlinear mixing between the memory mode a and the buffer mode b implemented by the SNAIL 7. In other words, the SNAIL 7 is configured to implement nonlinear mixing, which is a combination of at least three-wave mixing and four-wave mixing, with the third-order coefficient $c_3$ and the fourth-order coefficient $c_4$ being responsible for three-wave mixing and four-wave mixing, respectively.

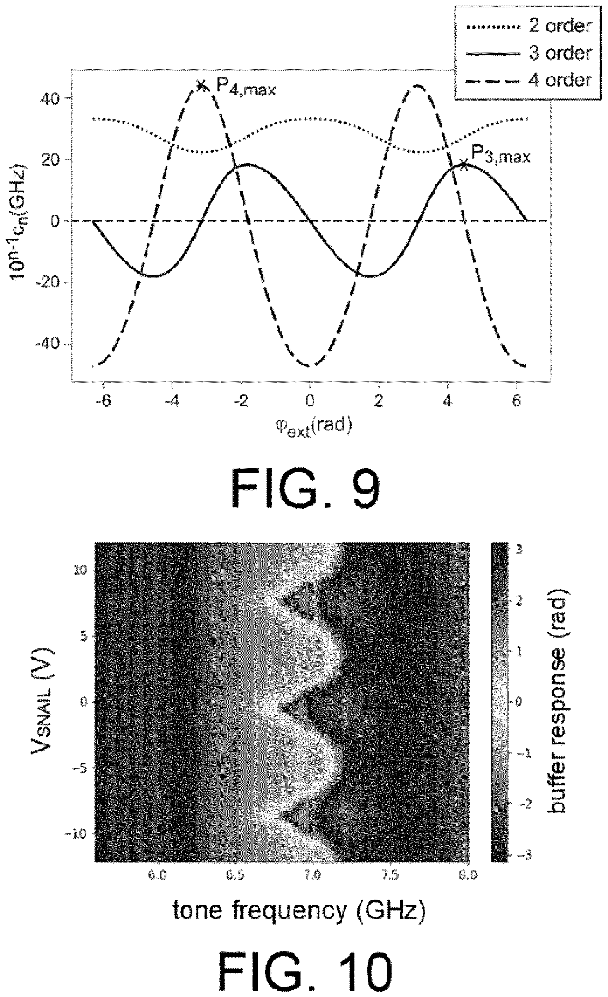

Figure 9 shows the respective curves of the $n^{th}$-order coefficients as a function of the reduced applied SNAIL magnetic flux $\varphi_{ext}$ for $n$ = 2, 3 and 4. The curve corresponding to $n$ = 2 is the dotted one, the curve corresponding to $n$ = 3 is the solid one, and the curve corresponding to $n$ = 4 is the dashed one.

Consequently, the SNAIL flux line 9 is used to control the SNAIL 7, and more specifically to adjust the SNAIL magnetic flux through the SNAIL 7 in order to select the desired operating point.

The non-linear superconducting quantum circuit 1 is configured to operate in a resonant dissipative mode in which the three-wave component of the nonlinear mixing is greater than the four-wave component. In other words, the three-wave component is dominant over the four-wave component.

To this end, the SNAIL flux line 9 generates a SNAIL magnetic flux causing the SNAIL 7 to exhibit a potential energy U in which the third-order coefficient $c_3$ is greater than the fourth-order coefficient $c_4$ in absolute value: $|c_3| > |c_4|$. In such a case, the nonlinear mixing implemented by the SNAIL 7 is characterized above all by three-wave mixing, which is predominant.

Furthermore, the resonant dissipative mode corresponds to a set of operating points. Within this set, certain remarkable operating points stand out in that, concurrently, the third-order coefficient $c_3$ reaches its absolute maximum value and the fourth-order coefficient $c_4$ is zero. At such operating points, nonlinear mixing corresponds to three-wave mixing. One of these remarkable operating points is indicated in Figure 9 and labelled "$P_{3,max}$". Such operating points can be referred to as Kerr-free points.

The SNAIL flux line 9 advantageously generates, in the resonant dissipative mode, a SNAIL magnetic flux causing the SNAIL 7 to implement only three-wave mixing between the memory mode a and the buffer mode b, thus to operate at a Kerr-free point.

The non-linear superconducting quantum circuit 1 is further configured to operate in a Kerr Hamiltonian mode in which the four-wave component of the nonlinear mixing is greater than one-tenth of the three-wave component.

To this end, the SNAIL flux line 9 generates a SNAIL magnetic flux causing the SNAIL 7 to exhibit a potential energy $U$ in which the fourth-order coefficient $c_4$ is greater than one-tenth of the third-order coefficient $c_3$ in absolute value: $|c_4| > \frac{1}{10}|c_3|$ .

These asymmetric definitions of the resonant dissipative mode and the Kerr Hamiltonian mode can be explained by referring to Figure 9. In this figure, it should be noted that the curves represent the respective evolution, not of the $n^{th}$-order coefficients $c_n$, but of the quantities $10^{n-1}c_n$, i.e. $10c_2$ for the dotted curve, $100c_3$ for the solid curve, and $1000c_4$ for the dashed curve. Analysis of these curves shows that the third-order coefficient $c_3$ is most often greater than the fourth-order coefficient $c_4$ in absolute value. However, it is not necessary for the four-wave component to exceed the three-wave component to implement significant four-wave mixing, particularly for stabilizing a Kerr-cat qubit as described in section C. below. In practice, it is sufficient for the fourth-order coefficient $c_4$ to be greater than one-tenth of the third-order coefficient $c_3$ in absolute value.

The resonant dissipative mode and the Kerr Hamiltonian mode are therefore not mutually exclusive. In the particular case where $|c_3| > |c_4| > \frac{1}{10}|c_3|$ , the non-linear superconducting quantum circuit 1 operates simultaneously in both the resonant dissipative mode and the Kerr Hamiltonian mode.

This being said, preferably, the SNAIL flux line 9 generates, in the Kerr Hamiltonian mode, a magnetic flux causing the SNAIL 7 to implement nonlinear mixing, with the four-wave component being greater than the three-wave component. In other words, the four-wave component is dominant over the three-wave component.

To this end, the SNAIL flux line 9 generates a SNAIL magnetic flux causing the SNAIL 7 to exhibit a potential energy $U$ in which the fourth-order coefficient $c_4$ is greater than the third-order coefficient $c_3$ in absolute value: $|c_4| > |c_3|$. In such a case, the nonlinear mixing implemented by the SNAIL 7 is characterized above all by four-wave mixing, which is predominant.

Furthermore, the Kerr Hamiltonian mode corresponds to a set of operating points. Within this set, certain remarkable operating points stand out in that, concurrently, the fourth-order coefficient $c_4$ reaches its absolute maximum value and the third-order coefficient $c_3$ is zero. At such operating points, nonlinear mixing corresponds to four-wave mixing. One of these remarkable operating points is indicated in Figure 9 and labelled "$P_{4,max}$". Such operating points can be referred to as maximal Kerr points.

The SNAIL flux line 9 advantageously generates, in the Kerr Hamiltonian mode, a SNAIL magnetic flux causing the SNAIL 7 to implement only four-wave mixing between the memory mode a and the buffer mode b, thus to operate at a maximal Kerr point.

It can be interesting to switch as quickly as possible from one operating point to another, particularly from resonant dissipative mode to Kerr Hamiltonian mode, and even more particularly from three-wave mixing to four-wave mixing, and vice versa. For this purpose, the SNAIL flux line 9 can be a fast-flux line. A fast-flux line is a flux line capable of combining AC and DC signals to send fast flux pulses. Specifically, the fast-flux line allows flux steps to be applied to switch quickly from one operating point to another.

With reference to section C. below, fast transitions between stabilization schemes are particularly useful, for instance to leverage the advantage of Kerr Hamiltonian stabilization with respect to quantum gates, such a Z or CNOT gate, or state preparation and measurement, while benefiting from the exponential suppression of bit-flip errors resulting from dissipative stabilization.

As mentioned above, at the end of subsection A.1, the non-linear superconducting quantum circuit 1 enables both Kerr Hamiltonian stabilization and resonant dissipative stabilization.

As detailed in section C. below, the Kerr Hamiltonian stabilization requires the non-linear superconducting quantum circuit 1 to operate in the Kerr Hamiltonian mode, while the resonant dissipative stabilization requires the non-linear superconducting quantum circuit 1 to operate in the resonant dissipative mode.

However, the resonant dissipative stabilization also requires the resonant frequency $f_b$ of the buffer mode b to be substantially equal to twice the resonant frequency $f_a$ of the memory mode a, i.e. $f_b = 2f_a$. This condition is commonly referred to as the frequency matching condition.

By "substantially equal", it should be understood here that, ideally, the resonant frequency $f_b$ of the buffer mode b is exactly equal to twice the resonant frequency $f_a$ of the memory mode a. However, in practice, the resonant frequency $f_b$ of the buffer mode b may differ or deviate by 1% from twice the resonant frequency $f_a$ of the memory mode a.

Consequently, the resonant dissipative mode of the non-linear superconducting quantum circuit 1 is unique in that, in addition to the dominance of the three-wave component over the four-wave component in the nonlinear mixing between the memory mode a and the buffer mode b, the resonant frequency $f_b$ of the buffer mode b is tuned to be substantially equal to twice the resonant frequency $f_a$ of the memory mode a.

To achieve this, the Applicant first explored the possibility of using only the SNAIL flux line 9 to both implement nonlinear mixing in which the three-wave component is dominant over the four-wave component, and set the resonant frequency $f_a$ of the memory mode a to satisfy the frequency matching condition.

Indeed, the SNAIL magnetic flux causes the SNAIL 7 to perturb the resonant frequency $f_a$ of the memory mode a.

This perturbation of the resonant frequency $f_a$ of the memory mode a is related to the second-order coefficient $c_2$ of the potential energy U of the SNAIL 7:

$$\omega_a \approx \omega_a^0 + 2c_2(\varphi_{ext})\varphi_a^2$$

where: - $\omega_a$ is the angular resonant frequency of the memory mode a, with $f_a = \dfrac{\omega_a}{2\pi}$ ,

- $\omega_a^0$ is the default angular resonant frequency of the memory mode a, i.e. the angular resonant frequency in the absence of perturbation, and

- $\varphi_a$ is the zero-point fluctuation of the superconducting phase of the memory mode a across the single Josephson junction 25, i.e. the contribution of the memory mode a to the superconducting phase $\varphi$.

However, this option presents challenges. Firstly, it is difficult to have both the frequency matching condition and a three-wave component that is dominant over the four-wave component, and extremely unlikely to have both the frequency matching condition and to operate the SNAIL 7 at a Kerr-free point. Furthermore, the SNAIL magnetic flux through the SNAIL 7 also perturbs the resonant frequency $f_b$ of the buffer mode b, making it even more difficult to achieve the frequency matching condition.

Figure 10 has been obtained experimentally and illustrates the influence of the voltage $V_{SNAIL}$ of the SNAIL flux line 9 on the resonant frequency $f_b$ of the buffer mode b.

Figure 10 is obtained by spectroscopy: a given voltage is applied to the SNAIL flux line 9, and a signal - or tone -, is sent at a given frequency through the buffer drive line 53 to the buffer mode b. The buffer response, i.e. the phase of the reflected signal, is measured.

This operation is repeated by sweeping both a voltage range for the SNAIL flux line 9 and a frequency range for the signal sent through the buffer drive line 53.

The resonance of the signal and the buffer mode b results in a phase drop. The resonant frequency $f_b$ of the buffer mode b can therefore be obtained in Figure 10 for a given voltage of the SNAIL flux line 9 by drawing a horizontal line from this given voltage to the phase drop, which is located at the boundary between the light and dark regions. The resonant frequency $f_b$ of the buffer mode b is the abscissa of the point corresponding to the phase drop.

To overcome these challenges, the non-linear superconducting quantum circuit 1 comprises, as previously detailed in subsection B.2, the tunable inductive element 21 and, as detailed below in subsection B.4, the DC SQUIDs flux line 11.

B.4 The DC SQUIDs flux line

Referring to Figure 1, the DC SQUIDs flux line 11 is inductively coupled to the tunable inductive element 21.

The DC SQUIDs flux line 11 is capable of carrying an electric current, which flows along the DC SQUIDs flux line 11 in the direction indicated by an arrow in Figure 1.

The DC SQUIDs flux line 11 is configured to generate a DC SQUIDs magnetic flux through the SNAIL 7. More particularly, the DC SQUIDs flux line 11 generates such a DC SQUIDs magnetic flux through the tunable inductive element 21 when the DC SQUIDs flux line 11 is traversed by an electric current. This DC SQUIDs magnetic flux varies the inductance of the tunable inductive element 21.

In view of the foregoing, it appears that the resonant frequency $f_b$ of the buffer mode b depends on both the SNAIL magnetic flux through the SNAIL 7 and the inductance of the tunable inductive element 21, i.e. the DC SQUIDs magnetic flux through the tunable inductive element 21.

Consequently, in the resonant dissipative mode, the SNAIL flux line 9 generates a SNAIL magnetic flux for causing the SNAIL 7 to implement nonlinear mixing with the three-wave component as the dominant component, and the DC SQUIDs flux line 11 generates a DC SQUIDs magnetic flux which, combined with the SNAIL magnetic flux, enables the frequency matching condition to be achieved, i.e. $f_b = 2f_a$.

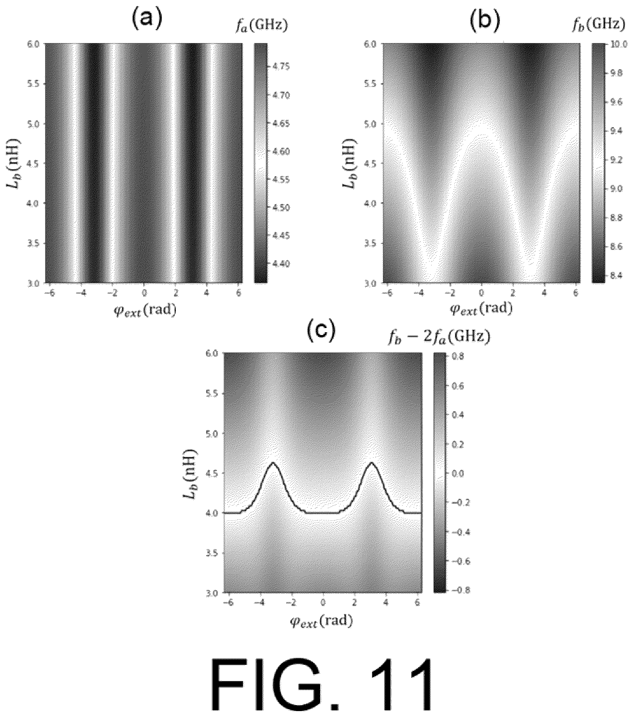

Figure 11 shows the resonant frequency $f_a$ of the memory mode a, the resonant frequency $f_b$ of the buffer mode b and the frequency matching condition $f_b - 2f_a$ as functions of the reduced applied SNAIL magnetic flux $\varphi_{ext}$ and the inductance $L_b$ of the tunable inductive element 21.

The results of Figure 11 have been obtained by simulating the non-linear superconducting quantum circuit 1 with the following parameters:

- $E_{C_a}/h = 0.2\ \mathrm{GHz}$ , where $E_{C_a}$ is the energy of the capacitive element 13;

- $E_{C_b}/h = 0.5\ \mathrm{GHz}$, , where $E_{C_b}$ is the energy of the capacitive element 19;

- $L_a = 8\ \mathrm{nH}$, where $L_a$ is the inductance of the inductive element 15;

- $L_b = 3 - 6\ \mathrm{nH}$, where $L_b$ is the inductance of the tunable inductive element 21, the inductance $L_b$ spans the range of values from 3 to 6 nH during the simulation;

- $L_L$ = 3 nH, where $L_L$ is the equivalent inductance of the at least one chain of Josephson junctions of the SNAIL 7, i.e. the inductance of the additional inductive element 23 in Figure 4, or the equivalent inductance of the additional inductive element 17 and the additional inductive element 23 in Figure 6; and

- $L_J$ = 15 nH, where $L_J$ is the Josephson inductance of the single Josephson junction 25.

Diagram (a) of Figure 11 is a map showing the evolution of the resonant frequency $f_a$ of the memory mode a. Unsurprisingly, it can be observed that the resonant frequency $f_a$ of the memory mode a depends only on the reduced applied SNAIL magnetic flux $\varphi_{ext}$, and not on the inductance $L_b$ of the tunable inductive element 21. As explained above at the end of subsection B.3, such a dependence is related to the second-order coefficient $c_2$ of the potential energy $U$.

Diagram (b) of Figure 11 is a map showing the evolution of the resonant frequency $f_b$ of the buffer mode b. As explained above, the resonant frequency $f_b$ of the buffer mode b depends on both the reduced applied SNAIL magnetic flux $\varphi_{ext}$ and the inductance $L_b$ of the tunable inductive element 21.

Finally, diagram (c) of Figure 11 is a map showing the evolution of the frequency matching condition $f_b$ - $2f_a$. The solid black line corresponds to the pairs of values $(\varphi_{ext}; L_b)$ for which $f_b$ - $2f_a$ = 0, i.e. the conditions where the frequency matching condition is achieved.

It is worth noting that the inductance of the tunable inductive element 21 can reach all the points where the frequency matching condition is satisfied, covering a narrow range from 4.0 to 4.6 nanohenrys (nH). This simulation underlines that the fabrication of the tunable inductive element 21 is not particularly restrictive, as it is not necessary for the tunable inductive element 21 to cover a wide inductance range.

As detailed in subsection B.2, the tunable inductive element 21 can be realized according to various designs, such as those presented in Figure 2.

Designs (a) and (b), which exploit symmetric DC SQUIDs 27, 35, have the advantage of being easier to manufacture and use. Design (c), which exploits asymmetric DC SQUIDs 43, has the advantage of reducing flux noise, which is proportional to the square root of the number of asymmetric DC SQUIDs 43.

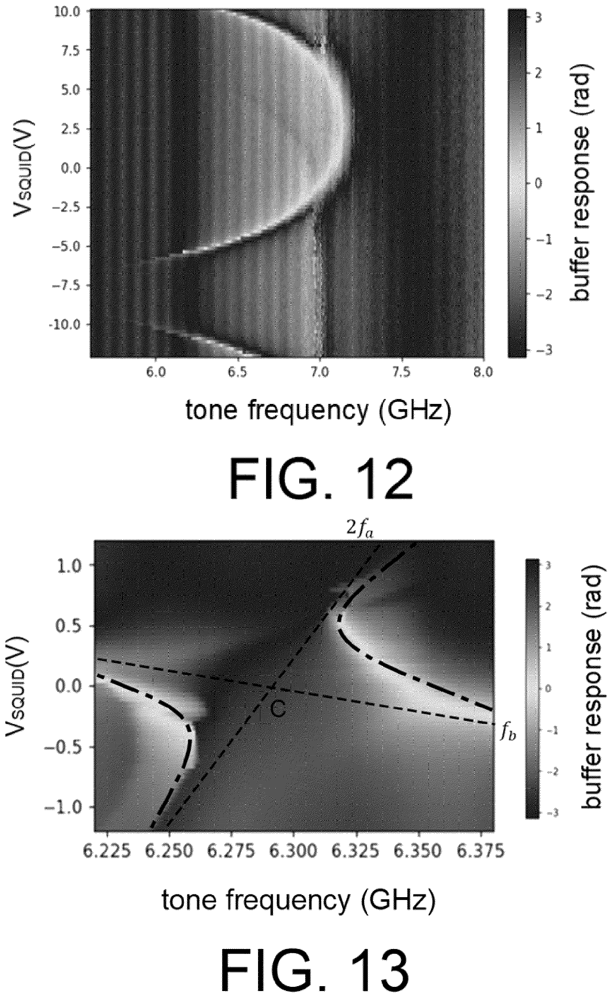

Figure 12 has been obtained experimentally and illustrates the influence of the voltage $V_{SQUID}$ of the DC SQUIDs flux line 11 on the resonant frequency $f_b$ of the buffer mode b.

Figure 12 is obtained by spectroscopy, on the same principle as Figure 10: a given voltage is applied to the DC SQUIDs flux line 11, and a signal - or tone -, is sent at a given frequency through the buffer drive line 53 to the buffer mode b. The buffer response, i.e. the phase of the reflected signal, is measured. This operation is repeated by sweeping both a voltage range for the DC SQUIDs flux line 11 and a frequency range for the signal sent through the buffer drive line 53.

The resonance of the signal and the buffer mode b results in a phase drop. The resonant frequency $f_b$ of the buffer mode b can therefore be obtained in Figure 12 for a given voltage of the DC SQUIDs flux line 11 by drawing a horizontal line from this given voltage to the phase drop, which is located at the boundary between the light and dark regions. The resonant frequency $f_b$ of the buffer mode b is the abscissa of the point corresponding to the phase drop.

Figure 13 is similar to Figure 12, except that spectroscopy is performed under specific conditions: the SNAIL 7 implements nonlinear mixing, with the three-wave component being dominant over the four-wave component. Under these conditions, it is only necessary to achieve the frequency matching condition for the nonlinear superconducting quantum circuit 1 to operate in the resonant dissipative mode.

In Figure 13, the points corresponding to the phase drops form two branches, which are indicated by dash-dotted lines, of a hyperbola-like curve. The two branches define asymptotes, specifically a first asymptote running from left to right and corresponding to the resonant frequency $f_b$ of the buffer mode b, and a second asymptote running from bottom to top and corresponding to twice the resonant frequency $f_a$ of the memory mode a. The intersection point C of the first and second asymptotes corresponds to the frequency matching condition, i.e. $f_b$ = $2f_a$.

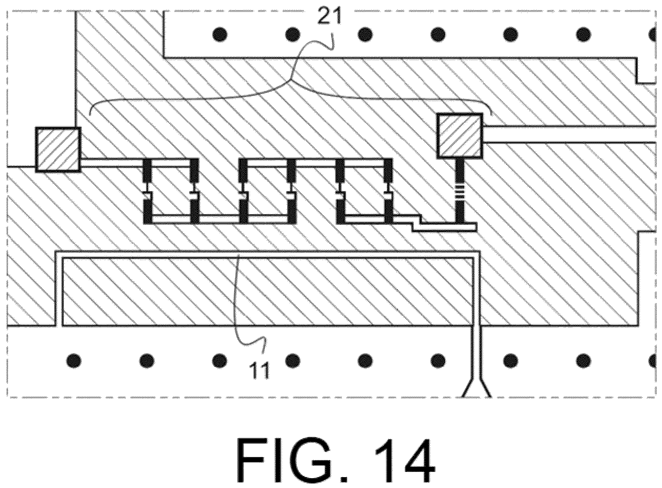

Figure 14 is a zoom of the physical layout of Figure 7. More particularly, Figure 14 shows the tunable inductive element 21 and the DC SQUIDs flux line 11.

It appears that the tunable inductive element 21 includes a chain of symmetric DC SQUIDs and a chain of Josephson junctions, with each Josephson junction corresponding to a thin line on the inductive element (not referenced in this figure) at the right end of the chain of symmetric DC SQUIDs. The tunable inductive element 21 is thus designed as shown in diagram (a) of Figure 2.

In this section B., the capability of the non-linear superconducting quantum circuit 1 to operate in a resonant dissipative mode and in a Kerr Hamiltonian mode has been demonstrated.

This hybrid nature of the non-linear superconducting quantum circuit 1 can be leveraged to stabilize a cat qubit in the memory mode a using either resonant dissipative stabilization or Kerr Hamiltonian stabilization. This possible use of the non-linear superconducting quantum circuit 1 is discussed hereinafter in section C.

C. A quantum system configured to perform a resonant dissipative stabilization and a Kerr Hamiltonian stabilization

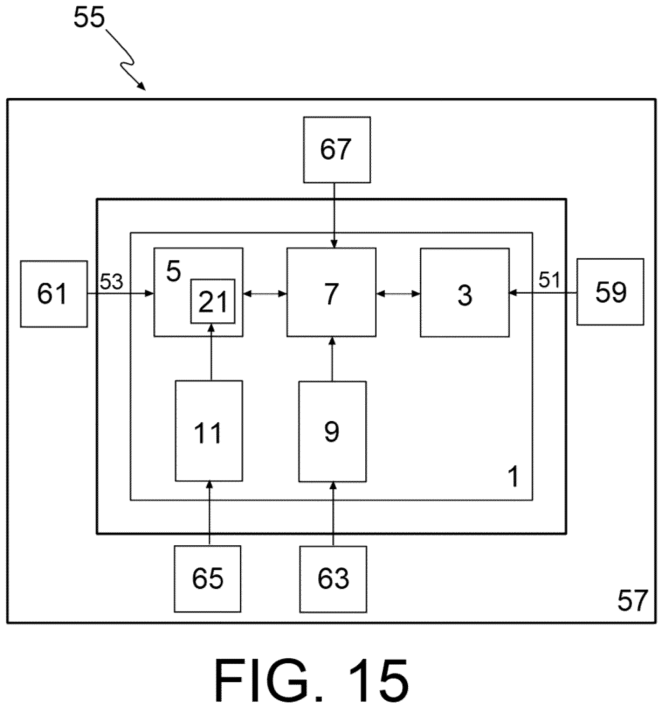

Figure 15 schematically illustrates a quantum system 55 configured to stabilize a cat qubit in the memory mode a using either resonant dissipative stabilization or Kerr Hamiltonian stabilization. In the following, a cat qubit stabilized using the resonant dissipative stabilization is a "resonant cat qubit", while a cat qubit stabilized using the Kerr Hamiltonian stabilization is a "Kerr-cat qubit".

The quantum system 55 comprises the (hybrid) non-linear superconducting quantum circuit 1 described in section B. above and a control circuit 57.

The main elements of the non-linear superconducting quantum circuit 1 are shown in Figure 15: the memory resonator 3 - or equivalently, the memory mode a -, the buffer resonator 5 - or equivalently, the buffer mode b -, the SNAIL 7, the SNAIL flux line 9, the DC SQUIDs flux line 11 and the tunable inductive element 21.

The control circuit 57 is configured to drive the non-linear superconducting quantum circuit 1 to stabilize a cat qubit in the memory mode a using either resonant dissipative stabilization or Kerr Hamiltonian stabilization.

As illustrated in Figure 15, the control circuit 57 includes a memory drive 59, a buffer drive 61, a SNAIL current source 63, a DC SQUIDs current source 65 and a squeezing drive 67.

The memory drive 59 is an electromagnetic radiation source arranged to deliver electromagnetic radiation at a frequency substantially equal to $f_a$ to the memory resonator 3 to drive the memory mode a.

The memory drive 59 is typically a microwave radiation source. It should be noted that such a microwave radiation source can be realized using a source emitting electromagnetic radiation in a wavelength range other than microwaves, such as an optical light source, provided that a spectral down-conversion is performed to convert the electromagnetic radiation into microwaves.

The memory drive 59 can be turned on to perform a quantum state tomography of the resonant cat qubit or the Kerr-cat qubit stabilized in the memory mode a.

The quantum state tomography is, for example, a Wigner tomography. Alternatively, the quantum state tomography can be a Husimi distribution tomography. The Husimi distribution is a smoothed version of the Wigner distribution; the Husimi distribution tomography is easier to implement than the Wigner one, but gives less complete results on the quantum state measured.

As schematically illustrated in Figure 15, the memory drive 59 is arranged to drive the memory mode a through the memory drive line 51, a small portion of which is also visible in Figure 7.

The buffer drive 61 is an electromagnetic radiation source arranged to deliver electromagnetic radiation at a frequency substantially equal to $f_b$ to the buffer resonator 5 to drive the buffer mode b.

The buffer drive 61 is typically a microwave radiation source. As explained above, a microwave radiation source can be realized using a source emitting electromagnetic radiation in a wavelength range other than microwaves, such as an optical light source, provided that a spectral down-conversion is performed to convert the electromagnetic radiation into microwaves.

As schematically illustrated in Figure 15, the buffer drive 61 is arranged to drive the buffer mode b through the buffer drive line 53, which is also visible in Figure 7.

As detailed below, the buffer drive 61 is involved in the resonant dissipative stabilization.

The SNAIL current source 63 is arranged to supply the SNAIL flux line 9 with electric current.

As detailed in section B. above, the electric current flowing along the SNAIL flux line 9 results in the generation of a SNAIL magnetic flux through the SNAIL 7. It is therefore possible, by adjusting and setting the intensity and/or voltage of the electric current delivered by the SNAIL current source 63, to modulate the nonlinear mixing between the memory mode a and the buffer mode b implemented by the SNAIL 7. In other words, the SNAIL current source 63 controls the SNAIL 7 to select the operating mode of the non-linear superconducting quantum circuit 1, i.e. the resonant dissipative mode or the Kerr Hamiltonian mode. As explained in section B. above, the non-linear superconducting quantum circuit 1 can also operate simultaneously in both the resonant dissipative mode and the Kerr Hamiltonian mode.

The SNAIL current source 63 is therefore involved both in the resonant dissipative stabilization and the Kerr Hamiltonian stabilization.

The SNAIL flux line 9 can be a fast-flux line, in which case the SNAIL current source 63 combines AC and DC sources.

The DC SQUIDs current source 65 is arranged to supply the DC SQUIDs flux line 11 with electric current.

As detailed in section B. above, the electric current flowing along the DC SQUIDs flux line 11 results in the generation of a DC SQUIDs magnetic flux through the tunable inductive element 21. It is therefore possible, by setting the intensity and/or voltage of the electric current delivered by the DC SQUIDs current source 65, to modulate the inductance of the buffer inductive element 21.

Since the resonant dissipative mode is characterized not only by nonlinear mixing with a dominant three-wave component, but also by the frequency matching condition, the DC SQUIDs current source 65, like the SNAIL current source 63, enables the resonant dissipative mode to be selected.

The DC SQUIDs current source 65 is therefore involved in the resonant dissipative stabilization.

Typically, the DC SQUIDs current source 65 is a DC source.

Finally, the squeezing drive 67 is an electromagnetic radiation source arranged to deliver electromagnetic radiation at a frequency substantially equal to $2f_a$, i.e. twice the resonant frequency $f_a$ of the memory mode a, to the SNAIL 7 to drive the SNAIL 7.

The squeezing drive 67 is typically a microwave radiation source. As explained above, a microwave radiation source can be realized using a source emitting electromagnetic radiation in a wavelength range other than microwaves, such as an optical light source, provided that a spectral down-conversion is performed to convert the electromagnetic radiation into microwaves.

As detailed below, the squeezing drive 67 is involved in the Kerr Hamiltonian stabilization.

The quantum system 55 is configured to perform a dissipative stabilization and a Kerr Hamiltonian stabilization.

For the purpose of performing a resonant dissipative stabilization, the non-linear superconducting quantum circuit 1 is to operate in the resonant dissipative mode.

To this end, the SNAIL current source 63 supplies the SNAIL flux line 9 with an electric current such that the SNAIL flux line 9 generates a SNAIL magnetic flux causing the SNAIL 7 to implement nonlinear mixing between the memory mode a and the buffer mode b, with the three-wave component being greater than the four-wave component.

Advantageously, the SNAIL current source 63 supplied the SNAIL flux line 9 with an electric current such that the SNAIL flux line 9 generates a SNAIL magnetic flux causing the SNAIL 7 to implement only three-wave mixing between the memory mode a and the buffer mode b, thus to operate at a Kerr-free point, for instance the operating point $P_{3,max}$ in Figure 9.

Furthermore, the DC SQUIDs current source 65 supplies the DC SQUIDs flux line 11 with an electric current such that the DC SQUIDs flux line 11 generates a DC SQUIDs magnetic flux varying the inductance of the buffer inductive element 21 for tuning the resonant frequency $f_b$ of the buffer mode b to be substantially equal to twice the resonant frequency $f_a$ of the memory mode a, i.e. $f_b = 2f_a$.

In the resonant dissipative mode of the non-linear superconducting quantum circuit 1, there is therefore predominant three-wave mixing between the memory mode a and the buffer mode b, and the frequency matching condition is satisfied. As explained in subsection A.1, and more specifically in stabilization scheme g), the two-to-one photon exchange is intrinsically performed. The two-to-one photon exchange allows the term $a^2 b^\dagger$ + h. c. to be engineered.

In addition to the operation of the non-linear superconducting quantum circuit 1 in the resonant dissipative mode, the buffer drive 61 is turned on. In other words, the buffer drive 61 drives the buffer mode b at frequency $f_b$. The buffer drive 61 allows the term $\alpha^2 b^\dagger$ + h. c. to be engineered.

The quantum system 55 therefore engineers the Hamiltonian $H/_\hbar = g_2(a^2 - \alpha^2)b^\dagger +$ h. c., where $g_2$ is the two-photon coupling rate, $a$ is the photon annihilation operator of the memory mode a, $b$ is the photon annihilation operator of the buffer mode b, $\alpha$ is a complex number characterizing the resonant cat qubit, and $\hbar$ is the reduced Planck constant. In such a case, the quantum system 55 stabilizes a resonant cat qubit in the memory mode a.

For the purpose of performing a Kerr Hamiltonian stabilization, the non-linear superconducting quantum circuit 1 is to operate in the Kerr Hamiltonian mode.

To this end, the SNAIL current source 63 supplies the SNAIL flux line 9 with an electric current such that the SNAIL flux line 9 generates a SNAIL magnetic flux causing the SNAIL 7 to implement nonlinear mixing between the memory mode a and the buffer mode b, with the four-wave component being greater than one-tenth of the three-wave component, and preferably greater than the three-wave component.

Advantageously, the SNAIL current source 63 supplied the SNAIL flux line 9 with an electric current such that the SNAIL flux line 9 generates a SNAIL magnetic flux causing the SNAIL 7 to implement only four-wave mixing between the memory mode a and the buffer mode b, thus to operate at a maximal Kerr point, for instance the operating point $P_{4,max}$ in Figure 9.

In the Kerr Hamiltonian mode of the non-linear superconducting quantum circuit 1, there is therefore significant four-wave mixing between the memory mode a and the buffer mode b. As explained in subsection A.1, and more specifically in stabilization scheme b), Kerr nonlinearity in introduced, which results in the term $Ka^{\dagger 2}a^2$ to be engineered.

In addition to the operation of the non-linear superconducting quantum circuit 1 in the Kerr Hamiltonian mode, the squeezing drive 67 is turned on. In other words, the squeezing drive 67 drives the SNAIL 7 at frequency $2f_a$. The squeezing drive 67 allows the term $\varepsilon_2(a^{\dagger 2} + a^2)$ to be engineered.

The quantum system 55 therefore engineers the Hamiltonian $H/_\hbar = -Ka^{\dagger 2}a^2 + \varepsilon_2(a^{\dagger 2} + a^2)$, where $K$ is the amplitude of the Kerr nonlinearity, $a$ is the photon annihilation operator, $\varepsilon_2$ is the amplitude of the squeezing drive 67, and $\hbar$ is the reduced Planck constant. In such a case, the quantum system 55 stabilizes a Kerr-cat qubit in the memory mode a.

Further details and information on Kerr Hamiltonian stabilization can be found in the article by A. Grimm et al., "The Kerr-Cat Qubit: Stabilization, Readout, and Gates" (Nature 584 (2020) 205-209, arXiv:1907.12131).

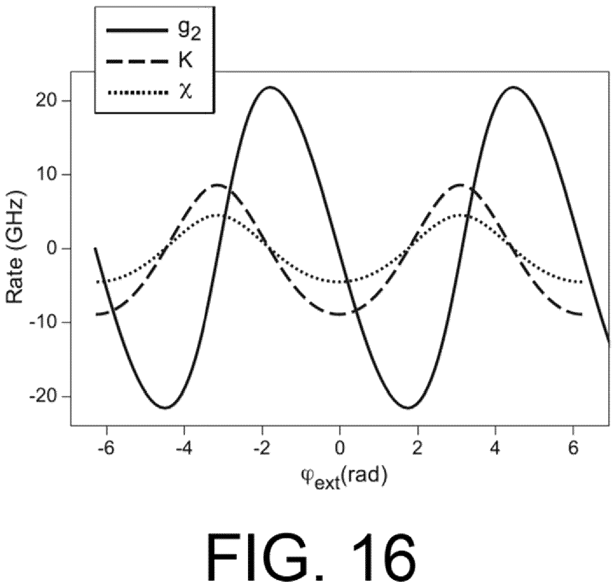

Figure 16 shows the respective curves of the two-photon coupling rate $g_2$ and the Kerr nonlinearity $K$ as a function of the reduced applied SNAIL magnetic flux $\varphi_{ext}$.

The curve corresponding to the two-photon coupling rate $g_2$ is the solid one, and the curve corresponding to the Kerr nonlinearity $K$ is the dashed one.

The two-photon coupling rate $g_2$ is substantially proportional to the third-order coefficient $c_3$, and the Kerr

nonlinearity $K$ is substantially proportional to the fourth-order coefficient $c_4$.

As such, the curves of Figure 16 can be correlated to the curves of Figure 9, just as the resonant dissipative stabilization and the Kerr Hamiltonian stabilization can be correlated to the resonant dissipative mode and the Kerr Hamiltonian mode, respectively.

Figure 16 also shows the curve of the buffer-memory cross-Kerr $\chi$ as a function of the reduced applied SNAIL magnetic flux $\varphi_{ext}$. This curve is the dotted one.

It should be noted that, in addition to Kerr-free points and maximal Kerr points, several operating points combine three-wave mixing and four-wave mixing, even if one is dominant over the other. This offers a variety of operating modes for the non-linear superconducting quantum circuit 1, and therefore for the quantum system 55. Such hybrid operating modes can be useful for implementing quantum gates or stabilizing cat qubits in the memory mode a.

**Claims**

1. A non-linear superconducting quantum circuit (1) including:

   - a memory mode (a) including a memory capacitive element (13) and a memory inductive element (15), said memory mode (a) having a memory resonant frequency depending on said memory capacitive element (13) and said memory inductive element (15);
   - a buffer mode (b) including a buffer capacitive element (19) and a buffer inductive element (21), said buffer inductive element (21) including DC superconducting quantum interference devices (27, 35, 43), DC SQUIDs, in series, said buffer mode (b) having a buffer resonant frequency depending on said buffer capacitive element (19) and said buffer inductive element (21);
   - a superconducting non-linear asymmetric inductive element (7), SNAIL, coupled to both the memory mode (a) and the buffer mode (b);
   - a SNAIL flux line (9) inductively coupled to the SNAIL (7) and configured to generate a SNAIL magnetic flux through the SNAIL (7), said SNAIL magnetic flux causing the SNAIL (7) to implement nonlinear mixing between the memory mode (a) and the buffer mode (b), said nonlinear mixing having a three-wave component and a four-wave component; and
   - a DC SQUIDs flux line (11) inductively coupled to the buffer inductive element (21) and configured to generate a DC SQUIDs magnetic flux through the buffer inductive element (21), said DC SQUIDs magnetic flux varying an inductance of the buffer inductive element (21),

   said non-linear superconducting quantum circuit (1) being configured to operate at least in:

   • a resonant dissipative mode in which the SNAIL flux line (9) generates a SNAIL magnetic flux causing the SNAIL (7) to implement non-linear mixing between the memory mode (a) and the buffer mode (b), with the three-wave component of said nonlinear mixing being greater than the four-wave component, and the DC SQUIDs flux line (11) generates a DC SQUIDs magnetic flux varying the inductance of the buffer inductive element (21) for tuning the buffer resonant frequency to be substantially equal to twice the memory resonant frequency, and
   • a Kerr Hamiltonian mode in which the SNAIL flux line (9) generates a SNAIL magnetic flux causing the SNAIL (7) to implement nonlinear mixing between the memory mode (a) and the buffer mode (b), with the four-wave component of said nonlinear mixing being greater than one-tenth of the three-wave component.

2. The non-linear superconducting quantum circuit (1) of claim 1, wherein each DC SQUID (27, 35) is symmetric, and the buffer inductive element (21) further includes Josephson junctions (29, 37) in series.

3. The non-linear superconducting quantum circuit (1) of claim 2, wherein the symmetric DC SQUIDs (27) are arranged successively in series, thereby forming a chain of symmetric DC SQUIDs (27), and the Josephson junctions (29) are arranged successively in series, thereby forming a chain of Josephson junctions (29), said chain of symmetric DC SQUIDs (27) and said chain of Josephson junctions (29) being connected in series.

4. The non-linear superconducting quantum circuit (1) of claim 2, wherein the symmetric DC SQUIDs (35) and the Josephson junctions (37) are connected in series alternately.

5. The non-linear superconducting quantum circuit (1) of claim 1, wherein each DC SQUID (43) is asymmetric.

6. The non-linear superconducting quantum circuit (1) of one of the preceding claims, wherein the SNAIL flux line (9) is a fast-flux line.

7. The non-linear superconducting quantum circuit (1) of one of the preceding claims, wherein the SNAIL (7) is a superconducting loop containing a single Josephson junction (25) and at least one chain of Josephson junctions (49, 50).

**8.** The non-linear superconducting quantum circuit (1) of claim 7, wherein the single Josephson junction (25) has a Josephson energy lower than that of each Josephson junction (49, 50) of the at least one chain of Josephson junctions (49, 50).

**9.** The non-linear superconducting quantum circuit (1) of claim 7 or 8, wherein the at least one chain of Josephson junctions (49) includes only one chain of Josephson junctions (49), said chain of Josephson junctions (49) and the single Josephson junction (25) being connected in parallel, said chain of Josephson junctions (49) forming an additional buffer inductive element (23), and the buffer mode (b) further including said additional buffer inductive element (23), with the buffer resonant frequency further depending on said additional buffer inductive element (23).

**10.** The non-linear superconducting quantum circuit (1) of claim 7 or 8, wherein the at least one chain of Josephson junctions (49, 50) includes a first chain of Josephson junctions (49) and a second chain of Josephson junctions (50), said first chain of Josephson junctions (49) and second chain of Josephson junctions (50) being connected to each other, on the one hand, via a common node and, on the other hand, via the single Josephson junction (25), said first chain of Josephson junctions (49) and second chain of Josephson junctions (50) forming respectively an additional buffer inductive element (23) and an additional memory inductive element (17), the memory mode (a) further including said additional memory inductive element (17), with the memory resonant frequency further depending on said additional memory inductive element (17), and the buffer mode (b) further including said additional buffer inductive element (23), with the buffer resonant frequency further depending on said additional buffer inductive element (23).

**11.** The non-linear superconducting quantum circuit (1) of one of the preceding claims, wherein the SNAIL magnetic flux causes the SNAIL (7) to exhibit a potential energy whose Taylor series expansion around a superconducting phase point at which said potential energy is minimized includes third- and fourth-order coefficients corresponding respectively to the three- and four-wave components, the three-wave component being greater than the four-wave component when the third-order coefficient is greater than the fourth-order coefficient in absolute value, and the four-wave component being greater than one-tenth of the three-wave component when the fourth-order coefficient is greater than one-tenth of the third-order coefficient in absolute value.

**12.** The non-linear superconducting quantum circuit (1) of one of the preceding claims, wherein, in the resonant dissipative mode, the SNAIL flux line (9) generates a SNAIL magnetic flux causing the SNAIL (7) to implement only three-wave mixing between the memory mode (a) and the buffer mode (b).

**13.** The non-linear superconducting quantum circuit (1) of one of the preceding claims, wherein, in the Kerr Hamiltonian mode, the SNAIL flux line (9) generates a SNAIL magnetic flux causing the SNAIL (7) to implement nonlinear mixing between the memory mode (a) and the buffer mode (b), with the four-wave component of said nonlinear mixing being greater than the three-wave component.

**14.** The non-linear superconducting quantum circuit (1) of one of the preceding claims, wherein, in the Kerr Hamiltonian mode, the SNAIL flux line (9) generates a SNAIL magnetic flux causing the SNAIL (7) to implement only four-wave mixing between the memory mode (a) and the buffer mode (b).

**15.** A quantum system (55) comprising:

- the non-linear superconducting quantum circuit (1) of one of the preceding claims; and
- a control circuit (57) including:

• a buffer drive (61) arranged to deliver electromagnetic radiation at a frequency substantially equal to the buffer resonant frequency to drive the buffer mode (b),
• a squeezing drive (67) arranged to deliver electromagnetic radiation at a frequency substantially equal to twice the memory resonant frequency to drive the SNAIL (7),
• a SNAIL current source (63) arranged to supply the SNAIL flux line (9) with electric current, and
• a DC SQUIDs current source (65) arranged to supply the DC SQUIDs flux line (11) with electric current,

said quantum system (55) being configured to perform:

o a resonant dissipative stabilization in which the SNAIL current source (63) and the DC SQUIDs current source (65) respectively supply the SNAIL flux line (9) and the DC SQUIDs flux line (11) with a respective electric current to operate the non-linear superconducting quantum circuit (1) in the resonant dissipative mode, while the buffer drive (61) drives the buffer mode (b) for causing the non-linear superconducting quantum circuit (1) to stabilize a resonant cat qubit in the memory mode (a), and

o a Kerr Hamiltonian stabilization in which the SNAIL current source (63) supplies the SNAIL flux line (9) with an electric current to operate the non-linear superconducting quantum circuit (1) in the Kerr Hamiltonian mode, and the squeezing drive (67) drives the SNAIL (7) for causing the non-linear superconducting quantum circuit (1) to stabilize a Kerr-cat qubit in the memory mode (a).

FIG. 1

FIG. 2

7

$\varphi_{ext}$

25

49

49

49

49

# FIG. 3

1

11

19 21

23 25 13

15

9

# FIG. 4

FIG. 5

FIG. 6

FIG. 7

FIG. 8

FIG. 9

FIG. 10

FIG. 11

# FIG. 12

# FIG. 13

# FIG. 14

# FIG. 15

FIG. 16

# EUROPEAN SEARCH REPORT

**Application Number**

EP 24 30 7286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANTOINE MARQUET ET AL: "Autoparametric resonance extending the bit-flip time of a cat qubit up to 0.3 s", ARXIV.ORG, CORNELL UNIVERSITY LIBRARY, 201 OLIN LIBRARY CORNELL UNIVERSITY ITHACA, NY 14853, 28 April 2024 (2024-04-28), XP091739749, DOI: 10.1103/PHYSREVX.14.021019 * page 1 - page 28; figure 1 * | 1-15 | INV. G06N10/40 G06N10/70 |
| A | WO 2019/077399 A1 (IBM [US]; IBM UK [GB]; IBM CHINA INVESTMENT CO LTD [CN]) 25 April 2019 (2019-04-25) * paragraph [0015] - paragraph [0020]; figure 3 * | 1-15 | |
| A | RONAN GAUTIER ET AL: "Combined Dissipative and Hamiltonian Confinement of Cat Qubits", ARXIV.ORG, CORNELL UNIVERSITY LIBRARY, 201 OLIN LIBRARY CORNELL UNIVERSITY ITHACA, NY 14853, 4 October 2024 (2024-10-04), XP091894609, DOI: 10.1103/PRXQUANTUM.3.020339 * page 1 - page 24; figures 10, 12, 17 * | 1-15 | |

**TECHNICAL FIELDS SEARCHED (IPC)**

G06N
H03K
H10N

The present search report has been drawn up for all claims

| Place of search | Date of completion of the search | Examiner |
|---|---|---|
| The Hague | 20 May 2025 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 30 7286

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | Publication date | Patent family member(s) | Publication date |
|---|---|---|---|
| WO 2019077399 A1 | 25-04-2019 | CN 111108687 A | 05-05-2020 |
| | | DE 112017007873 T5 | 07-05-2020 |
| | | GB 2581449 A | 19-08-2020 |
| | | JP 6941230 B2 | 29-09-2021 |
| | | JP 2021500737 A | 07-01-2021 |
| | | US 10235635 B1 | 19-03-2019 |
| | | US 2019156238 A1 | 23-05-2019 |
| | | US 2020050961 A1 | 13-02-2020 |
| | | US 2021110291 A1 | 15-04-2021 |
| | | WO 2019077399 A1 | 25-04-2019 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 4207005 A1
- EP 4468211 A1
- EP 23306839

### Non-patent literature cited in the description

- **R. LESCANNE et al.** Exponential suppression of bit-flips in a qubit encoded in an oscillator. *Nature Physics*, 2020
- **P. ARRANGOIZ-ARRIOLA et al.** Resolving the energy levels of a nanomechanical oscillator. *Nature*, 2019, vol. 571, 537
- **A. KRAFT et al.** Superconducting Quantum Interference Device (SQUID). *UBC Physics*, 2017
- **N. E. FRATTINI et al.** 3-Wave Mixing Josephson Dipole Element. *arXiv:1702.00869*
- **A. GRIMM et al.** The Kerr-Cat Qubit: Stabilization, Readout, and Gates. *Nature*, 2020, vol. 584, 205-209